# EUROPÄISCHE PATENTANMELDUNG

(11) **EP 1 071 061 A1**
(43) Veröffentlichungstag der Anmeldung: **24.01.2001**
(21) Anmeldenummer: 00115739.5
(22) Anmeldetag: 21.07.2000
(51) Int. Cl.: G08G 5/00, H05B 37/00

(54) **Dezentrales Steuerungssystem für Flughafenbefeuerung**

(30) Priorität: 22.07.1999 DE 29912811 U
(71) Anmelder: SIEMENS AKTIENGESELLSCHAFT, 80333 München (DE)
(72) Erfinder: Merkel, Jörg, Dipl.-Ing., 91056 Erlangen (DE)

(57) **Zusammenfassung**

Um ein Steuerungssystem zur Flughafenbefeuerung bereitzustellen, welche bei Anlagen unterschiedlichster Größe einsetzbar ist, wobei der wirtschaftliche Aufwand der Größe der Anlagen anpaßbar ist. Darüber hinaus soll der Installations- und Betreiberaufwand gering gehalten und die Ausfallraten minimiert werden, wird mit der Erfindung bereitgestellt ein Steuerungssystem zur Flughafenbefeuerung, wobei einzelne Befeuerungseinheiten Befeuerungskreisen zugeordnet sind, mehrere Befeuerungskreise eine Befeuerungsgruppe bilden und verschiedene Befeuerungsgruppen zu einem Befeuerungsbereich zusammengefaßt sind, und wobei das Steuerungssystem aus einer Vielzahl von dezentralen Steuerungseinheiten gebildet ist, die jeweils einem Befeuerungskreis zugeordnet sind.

## Beschreibung

Die vorliegende Erfindung betrifft ein Steuerungssystem zur Flughafenbefeuerung.

Die Flughafenbefeuerung wird tageszeitabhängig und vor dem Hintergrund von Sicherheitsvorschriften zentral gesteuert. Üblicherweise ist der größte Teil der technischen Einrichtungen zur Befeuerung von Flughäfen in vorn Tower abgesetzten Gebäuden, sogenannten Unterstationen untergebracht. Dabei stellen sich eine Reihe von Problemen. Zunächst einmal ist offensichtlich, daß die Steuerung und Überwachung der in Unterstationen angeordneten Einrichtungen problematisch ist, so daß Steuerungseinheiten unter Inkaufnahme eines hohen wirtschaftlichen Aufwandes redundant ausgelegt werden müssen. Bei Ausfall einer Unterstation beispielsweise ist ein gesamter Befeuerungsbereich nicht verwendbar. Zentrale Steuerungssysteme, die üblicherweise eine komplette Unterstation überwachen, haben den Nachteil, daß diese eine Grundauslegung haben, die unabhängig von der Größe der technischen Einrichtungen ist. Darüber hinaus ist erforderlich, diese Systeme redundant auszulegen, um Komplettausfälle von Unterstationen weitestgehend zu vermeiden. Ein Nachteil zentraler Steuerungssysteme besteht darin, daß diese äußerst schlecht skalierbar sind, d.h., daß auch bei sehr kleinen Anlagen eine aufwendige Zentraleinheit erforderlich ist.

Ausgehend von diesem Stand der Technik liegt der vorliegenden Erfindung die Aufgabe zugrunde, ein Steuerungssystem zur Flughafenbefeuerung bereitzustellen, welche bei Anlagen unterschiedlichster Größe einsetzbar ist, wobei der wirtschaftliche Aufwand der Größe der Anlagen anpaßbar ist. Darüber hinaus soll der Installations- und Betreiberaufwand gering gehalten und die Ausfallraten minimiert werden.

Zur technischen Lösung dieser Aufgabe wird mit der Erfindung bereitgestellt ein Steuerungssystem zur Flughafenbefeuerung, wobei einzelne Befeuerungseinheiten Befeuerungskreisen zugeordnet sind, mehrere Befeuerungskreise eine Befeuerungsgruppe bilden und verschiedene Befeuerungsgruppen zu einem Befeuerungsbereich zusammengefaßt sind, und wobei das Steuerungssystem aus einer Vielzahl von dezentralen Steuerungseinheiten gebildet ist, die jeweils einem Befeurungskreis zugeordnet sind.

Kern der Erfindung ist die Dezentralisierung der Steuerung, indem das Steuerungssystem durch eine Vielzahl von dezentralen Steuerungseinheiten gebildet ist. Diese Steuerungseinheiten können einzelnen Stromkreisen zugeordnet werden und diese steuern. Es ist sogar möglich, individuell einzelne Lampen einer Flughafenbefeuerung zu steuern. Die dezentralen Steuerungseinheiten sind mit einem übergeordneten Leitsystem gekoppelt und stehen mit diesem in Kommunikation. Über das Leitsystem werden den einzelnen Steuerungseinheiten die Steuerbefehle zugeleitet. Umgekehrt leiten gemäß einem Vorschlag der Erfindung die Steuerungseinheiten Statusinformationen an das Leitsystem zurück. Dieses kann aufgrund der Statusinformationen Ausfall- oder Fehlervorgänge ermitteln und umgehend darauf reagieren. Bei Ausfall einer dezentralen Steuerungseinheit kann diese ausgetauscht werden, oder ihre Aufgaben können bei entsprechender Verschaltung von einer benachbarten Steuerungseinheit übernommen werden.

Die Ansteuerungsbefehle werden in Stromregelungsvorgänge in den Steuerungseinheiten umgesetzt. Diese sind vorzugsweise mit dem Leitsystem im Rahmen eines Netzwerkes gekoppelt, so daß die Steuerungseinheiten einen modularen Aufbau aufweisen. Vorteilhafterweise handelt es sich um Single-Board-Computer, die eine Netzwerkkarte und die erforderlichen Systemschnittstellen für die Ausführung der Steuerungsaufgaben aufweisen. Gemäß einem vorteilhaften Vorschlag der Erfindung kann aus Gründen der Redundanz eine zweite Netzwerkkarte vorgesehen sein.

Mit der Erfindung wird ein einfach aufgebautes und mit einer Vielzahl von Standardmitteln realisierbares Steuerungssystem angegeben, welches Ausfallgefahren auf ein Minimum reduziert. Die Kommunikation erfolgt vorzugsweise über ein Datenbussystem, beispielsweise Profibus oder dergleichen. Die Zentralregeleinheit kann aus bestehenden Systemen ausgewählt sein, beispielsweise Siematic S5 oder dergleichen. Vorzugsweise werden 32-Bit-Signale ausgetauscht. Die Standardschnittstellen können serielle Schnittstellen oder auch parallele Schnittstellen umfassen.

Kernmerkmal der Erfindung ist die Dezentralisierung der Steuerungseinheiten, so daß die Skalierbarkeit denkbar ist. Selbst bei äußerst kleinen Anlagen muß nur eine geringe Anzahl einzelner dezentraler Steuerungseinheiten mit einem Leitsystem gekoppelt werden.

Durch die Erfindung wird es darüber hinaus möglich, weitestgehend individuelle Ansteuerungen von Kreisen oder Lampen von Befeuerungssystemen durchzuführen. Damit wird die Flughafenbefeuerung auch für übergeordnete Einsatzbereiche befähigt, beispielsweise die Übermittlung von Weginformationen an Flugzeugführerpersonal unter Nutzung eines Feuerungssystems und dergleichen. Weitere Vorteile und Merkmale der Erfindung ergeben sich aus der folgenden Beschreibung eines Ausführungsbeispiels anhand der beiliegenden Figuren. Dabei zeigen:
- FIG 1: ein Ausführungsbeispiel für den Aufbau eines dezentralen Steuerungssystemes und
- FIG 2: ein Ausführungsbeispiel für den internen strukturellen Aufbau einer Steuerung.

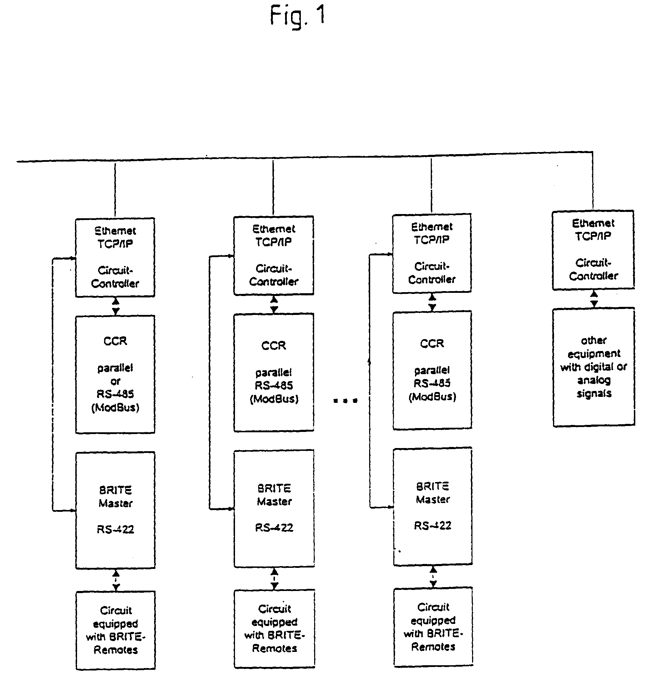

Gemäß FIG 1 ergibt sich eine wirtschaftlich aufbaubare und sehr effektive Lösung daraus, daß Steuer-PC und entsprechende Steuereinheiten entbehrlich werden, indem die Constant Current Regulators (CCR) und die Regler (BRITE-Master) mit soviel Eigenintelligenz und Rechenleistung ausgestattet werden, daß sie mit dem Leitsystem auf hohem Level direkt kommunizieren können. Gemäß Figur 1 ist eine alternative Lösung dargestellt, bei der ein Circuit-Controller einen CCR und einen BRITE-Master über die vorhandenen Schnittstellen ansteuert. Dieser Circuit-Controller seinerseits ist in der Lage, mit dem Leitsystem zu kommunizieren. Als Leitsystemverbindung kann beispielsweise ein Ethernet verwendet werden.

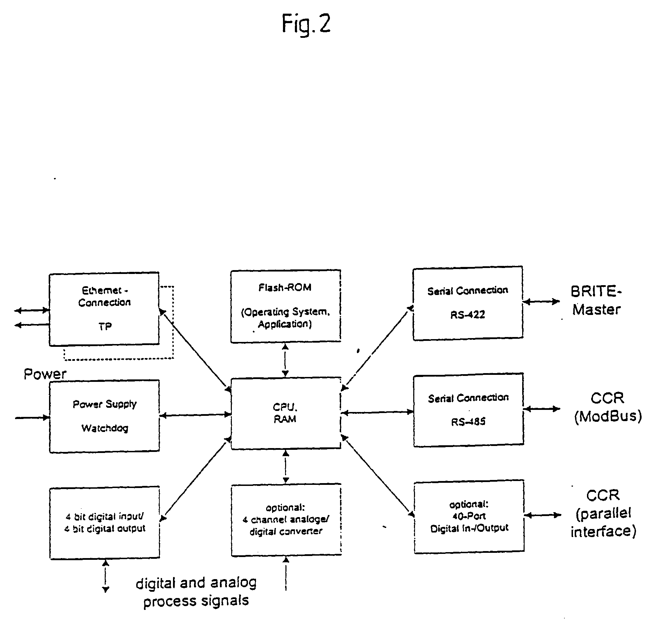

Gemäß der internen Struktur, wie in FIG 2 gezeigt, kann der Controller beim Einschalten sein Betriebssystem und die Anwendung beispielsweise aus einem Flash-ROM laden und einen Selbsttest sowie einen Interface-Test durchführen. Anschließend erwartet er vom Leitsystem Konfigurierungsdaten. Dabei handelt es sich um BRITE-spezifische Daten, wie angeschlossene Remotes, konfigurierte Repeater, Verhaltensregeln in bezug auf Synchronisierung mit anderen Controllern und dergleichen. Danach werden vom übergeordneten System die Befehle erwartet und ausgeführt.

Das beschriebene Ausführungsbeispiel dient nur der Erläuterung und ist nicht beschränkend.

## Patentansprüche

1. Steuerungssystem zur Flughafenbefeuerung, wobei einzelne Befeuerungseinheiten Befeuerungskreisen zugeordnet sind, mehrere Befeuerungskreise eine Befeuerungsgruppe bilden und verschiedene Befeuerungsgruppen zu einem Befeuerungsbereich zusammengefaßt sind, und wobei das Steuerungssystem aus einer Vielzahl von dezentralen Steuerungseinheiten gebildet ist, die jeweils einem Befeuerungskreis zugeordnet sind.

2. Steuerungssystem nach Anspruch 1, **dadurch gekennzeichnet,** daß die dezentralen Steuerungseinheiten für die individuelle Steuerung von Lampen einer Flughafenbefeuerung eingesetzt sind.

3. Steuerungssystem nach einem der vorgehenden Ansprüche, **dadurch gekennzeichnet,** daß die dezentralen Steuerungseinheiten mit einem übergeordneten Leitsystem kommunizieren.

4. Steuerungssystem nach einem der vorgehenden Ansprüche, **dadurch gekennzeichnet,** daß die dezentralen Steuerungseinheiten zur Stromregelung angesteuert werden.

5. Steuerungssystem nach einem der vorgehenden Ansprüche, **dadurch gekennzeichnet,** daß die dezentralen Steuerungseinheiten Statusinformationen an das Leitsystem übergeben.

6. Steuerungssystem nach einem der vorgehenden Ansprüche, **dadurch gekennzeichnet,** daß das Leitsystem aus den Statusinformationen Fehler- bzw. Ausfallinformationen ermittelt.

7. Steuerungssystem nach einem der vorgehenden Ansprüche, **dadurch gekennzeichnet,** daß die dezentralen Steuerungseinheiten mit dem Leitsystem in einem Netzwerk gekoppelt sind.

8. Steuerungssystem nach einem der vorgehenden Ansprüche, **dadurch gekennzeichnet,** daß die dezentralen Steuerungseinheiten Single-Board-Computer sind.

9. Steuerungssystem nach einem der vorgehenden Ansprüche, **dadurch gekennzeichnet,** daß die dezentralen Steuerungseinheiten über Systemschnittstellen und eine Netzwerkkarte verfügen.

10. Steuerungssystem nach Anspruch 9, **dadurch gekennzeichnet,** daß die dezentralen Steuerungseinheiten eine redundante zweite Netzwerkkarte aufweisen.
